**Europäisches Patentamt**

**European Patent Office**

**Office européen des brevets**

(19)

(11) Veröffentlichungsnummer : **0 396 852 B1**

(12) **EUROPÄISCHE PATENTSCHRIFT**

(45) Veröffentlichungstag der Patentschrift :
30.10.91 Patentblatt 91/44

(51) Int. Cl.$^5$ : **C02F 11/12, F26B 3/00**

(21) Anmeldenummer : **90100899.5**

(22) Anmeldetag : **17.01.90**

(54) **Verfahren und Anlagen zum Trocknen von Klärschlamm.**

(30) Priorität : 09.05.89 DE 3915082

(43) Veröffentlichungstag der Anmeldung :
14.11.90 Patentblatt 90/46

(45) Bekanntmachung des Hinweises auf die
Patenterteilung :
30.10.91 Patentblatt 91/44

(84) Benannte Vertragsstaaten :
AT BE CH DE DK ES FR GB GR IT LI LU NL SE

(56) Entgegenhaltungen :
NL-A- 6 905 045
AUFBEREITUNGS-TECHNIK, Band 29, Nr. 5,
1988, Seiten 243-251; H.G. BÄUERLE et al.:
"Die Kontakttrocknung von kommunalen Klärschlämmen"

(73) Patentinhaber : **Deutsche Babcock Anlagen
Aktiengesellschaft
Duisburger Strasse 375
W-4200 Oberhausen 1 (DE)**

(72) Erfinder : **Wischniewski, Martin
Fabritiusstrasse 38
W-4150 Krefeld 11 (DE)**
Erfinder : **Obers, Horst, Dr.
Gaspelshof 16
W-4156 Willich (DE)**
Erfinder : **Bäuerle, Hans Gottfried, Dr.
Kieselei 11
W-4030 Ratingen 6 (DE)**

(74) Vertreter : **Planker, Karl-Josef, Dipl.-Phys.
c/o Deutsche Babcock Anlagen AG
Parkstrasse 29 Postfach 4 + 6
W-4150 Krefeld 11 (DE)**

EP 0 396 852 B1

## Beschreibung

Die Erfindung betrifft Verfahren zum Trocknen von Klärschlamm gemäß den Oberbegriffen der Patentansprüche 1 und 2. Außerdem betrifft die Erfindung Anlagen zur Trocknung von Klärschlamm gemäß den Oberbegriffen der Patentansprüche 5 und 6.

In einer umfassenden Arbeit in der DE-Z "Aufbereitungstechnik", Heft 5/88, 29. Jahrgang, Seiten 243 bis 251, über die Kontakttrocknung von kommunalen Klärschlämmen werden die Vorteile der Kontakttrocknung gegenüber der Konvektionstrocknung hervorgehoben. Diese Vorteile bestehen insbesondere darin, daß der spezifische Wärmebedarf gering ist und daß keine aufwendigen Maßnahmen für die Brüden- und Abgasbehandlung erforderlich sind. In der Arbeit wird aber auch auf eine Schwierigkeit hingewiesen : Bei der Trocknung von Klärschlamm über einen TS-Gehalt von 50% (Trockensubstanzgehalt in Massen-%) stellt man fest, daß in Abhängigkeit von der Klärschlammbeschaffenheit bis etwa 60% TS eine zähplastische Phase durchlaufen wird, die zu Anbakkungen an den Heizflächen führt und eine hinreichende Durchmischung nicht mehr zuläßt, wodurch der Wärmeübergang stark eingeschränkt würde. Daher wird es für erforderlich gehalten, den vorentwässerten Klärschlamm mit einem rezirkulierten Teilstrom des Fertiggutes zu vermischen. Das so erhaltene Mischgut wird mit einem TS-Gehalt von 60 bis 70% dem Trockner aufgegeben und auf einen TS-Gehalt von 90 bis 95% gebracht.

Bei diesen Verfahren sind die zurückzuführenden Fertiggutmengen relativ groß. Das verdeutlicht das folgende Beispiel : Um aus 1.000 kg vorentwässertem Schlamm mit 25% TS-Gehalt ein Mischgut mit 65% TS-Gehalt herzustellen, benötigt man 1.600 kg Fertiggut mit einem TS-Gehalt von 90%. Die zu trocknende Menge Mischgut ist also 2.600 kg. Die hohe Rückführmenge bedingt einen entsprechenden Aufwand an peripheren Einrichtungen zum Sieben, Fördern und Mischen.

Die DE-OS 2628948 beschreibt ein Verfahren zum Dehydrieren und Trocknen feinkörniger Produkte, die in einer Trübe enthalten sind. Die Trübe wird in einem Filter mechanisch entwässert, und der Filterkuchen wird in einem rotierenden Kontakttrockner auf die gewünschte Endfeuchte gebracht. Eine Fertiggutrückführung ist offenbar nicht vorgesehen. Daher dürfte das Verfahren wegen der oben erwähnten Schwierigkeit kaum geeignet sein, Klärschlamm auf einen TS-Gehalt über etwa 50% herunterzutrocknen.

Mit einem Verfahren zum Trocknen von Klärschlamm befaßt sich die DE-OS 3518323. Der flüssige Klärschlamm wird in einer Zentrifuge, Filterpresse oder dergleichen in ein Zwischenprodukt mit pastöser Konsistenz umgewandelt. Dieses Zwischenprodukt wird zu Partikeln mit relativ großer Oberfläche geformt, und die Partikel werden, vorzugsweise in einem Bandtrockner, einem Trocknungsgasstrom ausgesetzt und dabei auf einen TS-Gehalt bis zu 95% gebracht. Bei diesem Verfahren wirkt sich die klebrige Phase des Gutes in dem Bereich um 50% TS weniger störend aus, so daß die Fertiggutrückführung entbehrlich ist. Jedoch hat die Konvektionstrocknung gegenüber der Kontakttrocknung den Nachteil, daß große Heißgasmengen erforderlich sind, die einen erhöhten Wärmebedarf bedingen und mit großem Aufwand gereinigt werden müssen.

Der Erfindung liegt allgemein die Aufgabe zugrunde, die Klärschlammtrocknung zu optimieren und den anlagentechnischen Aufwand zu verkleinern. Insbesondere besteht eine erste Aufgabe darin, bei einem Verfahren gemäß dem Oberbegriff des Anspruchs 1 die Menge des zurückzuführenden Fertiggutes zu verkleinern. Eine zweite Aufgabe besteht darin, bei einem Verfahren gemäß dem Oberbegriff des Anspruchs 2 die mit der Konvektionstrocknung verbundenen wärme- und umwelttechnischen Nachteile auf ein Mindestmaß zu reduzieren, ohne daß dabei eine Schlammrückführung erforderlich wird. Eine dritte Aufgabe besteht darin, eine Anlage gemäß dem Oberbegriff des Anspruchs 5 zu schaffen, bei der die zur Rückführung des Fertiggutes erforderlichen Einrichtungen erheblich kleiner gehalten werden können. Schießlich besteht eine vierte Aufgabe darin, eine Anlage gemäß dem Oberbegriff des Anspruchs 6 zu schaffen, bei der die mit der Konvektionstrocknung verbundenen wärme- und umwelttechnischen Nachteile auf ein Mindestmaß reduziert sind, ohne daß dabei eine Fertiggutrückführung erforderlich wird.

Die erste und die zweite Aufgabe werden gemäß den übereinstimmenden kennzeichnenden Teilen der Ansprüche 1 und 2 dadurch gelöst, daß sowohl bei dem einen als auch bei dem anderen Verfahren die Vorbehandlung eine Trocknung umfaßt, in der das Gut unter fortwährender Umwälzung durch Berührung mit heißen Flächen auf einen TS-Gehalt von 45 bis 55% gebracht wird.

Eine bevorzugte Variante des Verfahrens gemäß Anspruch 2 ist in Anspruch 3 angegeben.

Gemäß Anspruch 4 umfaßt die Vorbehandlung vorzugsweise auch eine der Trocknung vorgeschaltete maschinelle Entwässerung.

Die dritte und die vierte Aufgabe werden gemäß den übereinstimmenden kennzeichnenden Teilen der Ansprüche 5 und 6 dadurch gelöst, daß sowohl für die eine als auch für die andere Anlage die Vorbehandlungseinrichtung einen Kontakttrockner umfaßt.

Eine bevorzugte Ausführungsform der Anlage gemäß Anspruch 6 ist in Anspruch 7 angegeben.

Gemäß Anspruch 8 umfaßt die Vorbehandlungseinrichtung vorzugsweise eine dem Kontakttrockner vorgeschaltete maschinelle Entwässerungseinrichtung.

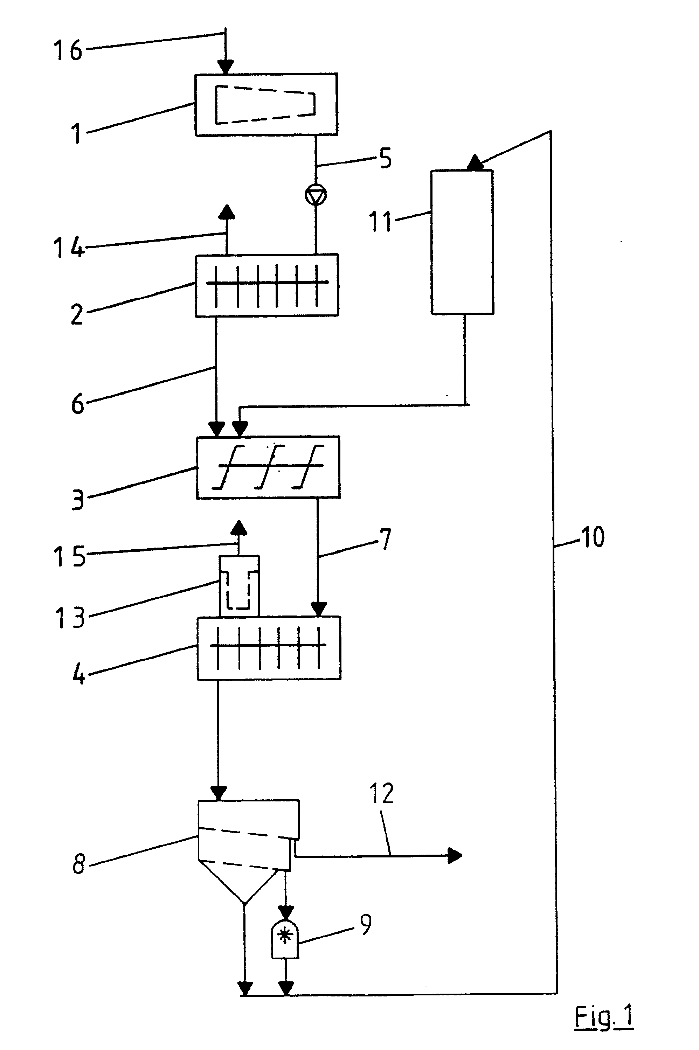

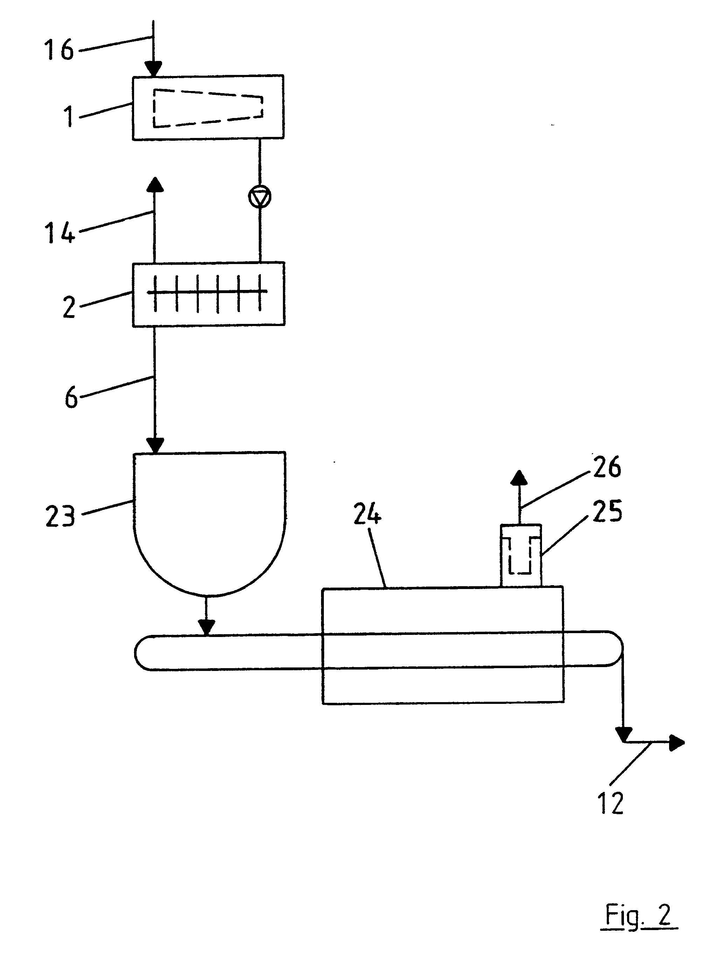

Die Zeichnung dient zur Erläuterung der Erfindung. Figur 1 und Figur 2 zeigen schematisch je eine Anlage zur Durchführung eines erfindungsgemäßen Verfahrens.

Zu der in Figur 1 dargestellten Anlage gehören im wesentlichen vier Komponenten, und zwar eine maschinelle Entwässerungseinrichtung 1, ein Kontakttrockner 2, ein Mischer 3 und ein weiterer Kontakttrockner 4. Die maschinelle Entwässerungseinrichtung ist z.B. eine Zentrifuge, eine Siebbandpresse oder eine Kammmerfilterpresse. Sie bildet zusammen mit dem nachgeschalteten Kontakttrockner 2 die Vorbehandlungseinrichtung. Die Kontakttrockner 2, 4 sind Muldentrockner bekannter Bauart, z.B. wie in der eingangs angegebenen DE-Z beschrieben. Fördereinrichtungen 5, 6, 7 verbinden den Ausgang der maschinellen Entwässerungseinrichtung 1 mit dem Eingang des Kontaktrockners 2, den Ausgang des Kontakttrockners 2 mit einem Eingang des Mischers 3 und den Ausgang des Mischers 3 mit den Eingang des Kontakttrockners 4. Außerdem ist der Ausgang des Kontakttrockners 4 durch eine Rückführungseinrichtung mit einem Eingang des Mischers 3 verbunden. Die Rückführeinrichtung umfaßt ein Doppelsieb 8, eine Mühle 9, einen Staubförderer 10 und einen Staubsilo 11. Von dem Überlauf des Siebs 8 geht eine Austragfördereinrichtung 12 für das Fertiggut aus. Der Kontakttrockner 4 ist mit einem Staubfilter 13 für die Brüden ausgestattet. Brüdenleitungen 14, 15, die von den beiden Kontakttrocknern 2, 4 ausgehen, sind in der Zeichnung nur angedeutet. Sie und in bekannter Weise zu einer nicht dargestellten Kondensations- und Wärmerückgewinnungseinrichtung geführt. Eine ebenfalls nicht dargestellte Strippkolonne dient zum Austreiben des Ammoniaks aus dem Kondensat.

Der nasse Klärschlamm, dessen TS-Gehalt etwa bei 5% liegt, wird zunächst gemäß Pfeil 16 der maschinellen Entwässerungseinrichtung 1 zugeführt und darin von dem weitaus größten Teil des Schlammwassers befreit. Das mechanisch entwässerte Gut hat einen TS-Gehalt von etwa 15 bis 30%. Dieses Gut wird in dem Kontakttrockner (2) unter fortwährender Umwälzung durch Berührung mit heißen Flächen getrocknet. Die Trocknung wird abgebrochen, bevor die klebrige Phase erreicht wird. Die Grenze liegt üblicherweise zwischen 45 und 55% TS-Gehalt ; sie ist von Fall zu Fall durch Versuche zu ermitteln. Das anfallende Zwischenprodukt wird in dem Mischer 3 mit Fertiggut aus dem Kontakttrockner 4 in einer solchen Menge versetzt, daß ein granulatartiges Mischgut erhalten wird. Erfahrungsgemäß ist es hierzu erforderlich, daß der TS-Gehalt des Mischgutes zwischen etwa 60 und 70% liegt. Durch die Beimischung von Fertiggut wird also der Bereich, in dem die klebrige Phase durchlaufen wird, überbrückt. In der Regel wird zu diesem Zweck durch Beimischung von Fertiggut der TS-Gehalt um etwa 10 bis 15% angehoben. Das Mischgut läßt sich ohne Schwierigkeit in dem Kontakttrocker 4 weiter bis auf den gewünschten TS-Gehalt des Fertiggutes trocknen.

Beispiel : 5.000 kg Naßschlamm mit 5% TS-Gehalt werden maschinell bis auf 25% TS-Gehalt entwässert. Man erhält 1.000 kg entwässerten Schlamm. Dieser wird in dem Kontakttrockner 2 bis auf einen TS-Gehalt von 50% getrocknet. Die so erhaltene Menge von 500 kg Zwischenprodukt wird mit Fertiggut versetzt. Um ein Mischgut von 65% TS-Gehalt herzustellen, benötigt man 300 kg Fertiggut mit einem TS-Gehalt von 90%. Die Gesamtmenge des Mischgutes liegt also bei 800 kg. Der Vergleich mit dem eingangs angegebenen Beispiel zeigt, daß die Menge des rückgeführten Fertiggutes weniger als 1/5 der Menge beträgt, die nach dem Stand der Technik erforderlich wäre.

Zu der in Figur 2 dargestellten Anlage gehören im wesentlichen vier Komponenten, und zwar eine maschinelle Entwässerungseinrichtung 1, ein Kontakttrockner 2, eine Granuliereinrichtung 23 und ein Bandtrockner 24. Diejenigen Teile der Anlage, die in Figur 2 ein bereits in Figur 1 verwendetes Bezugszeichen haben, stimmen mit den entsprechenden Teilen der Anlage gemäß Figur 1 überein und haben die gleiche Funktion ; sie bedürfen daher keiner Beschreibung.

Die Granuliereinrichtung 23 ist dem Bandtrockner 24 als Aufgabevorrichtung zugeordnet. Sie ist eine der Maschinen bekannter Bauart, die üblicherweise dazu verwendet werden, pastöse Substanzen vor der Aufgabe auf einen Bandtrockner zu würstchenförmigen Partikeln zu formen. Der Bandtrockner 24 ist mit einem Staubfilter 25 für die Brüden ausgestattet. Brüdenleitungen 14, 26 die von dem Kontaktrockner 2 bzw. von dem Bandtrockner 24 ausgehen, sind in der Zeichnung angedeutet.

Das in dem Kontakttrockner 2 anfallende Zwischenprodukt wird in der Granuliereinrichtung 23 zu würstchenförmigen Partikeln geformt, die in dünner Schicht auf das perforierte Förderband des Bandtrockners aufgegeben werden. Die Trocknung bis auf den gewünschten TS-Gehalt erfolgt in der bei Bandtrocknern üblichen Weise, in dem die aus den Partikeln gebildete, auf dem Förderband ruhende Schicht mit heißem Gas durchsetzt wird. Eine Rückmischung mit Fertiggut ist nicht vorgesehen, da die zeitweise klebrige Konsistenz der Partikel für die Trocknung im Bandtrockner keine nachteiligen Auswirkungen hat.

Beispiele : 5.000 kg Naßschlamm mit 5% TS-Gehalt werden maschinell bis auf 25% TS-Gehalt entwässert. Man erhält 1.000 kg entwässerten Schlamm. Dieser wird in dem Kontakttrockner 2 auf einen TS-Gehalt von 50% gebracht. Von den 750 kg Wasser, die nach der Vorentwässerung noch in dem Schlamm enthalten waren, sind in dem nach dem Kontakttrockner anfallenden Zwischenprodukt noch 250 kg enthalten. Der Hauptteil des Wassers wird also dem Gut schon in dem wärme- und umwelttechnisch vorteilhaften Kontakttrockner 2 entzogen. In dem weniger günstigen Bandtrockner 24 wird der TS-Gehalt auf 90% gebracht. Die verdampfte Wassermenge beträgt nur rund 222 kg. Es genügt also ein relativ kleiner Bandtrockner. Der Bedarf an heißem Trocknungsgas und der Aufwand für die Abgasreinigung verkleinern sich entsprechend.

## Patentansprüche

1. Verfahren zum Trocknen von Klärschlamm auf einen wesentlich über 65%, insbesondere über 90%, liegenden Gehalt an Trockenstoff, wobei das Gut folgende Verfahrensstufen nacheinander durchläuft :

a)     Durch eine Vorbehandlung wird ein Zwischenprodukt hergestellt, dem bereits ein Teil des Wassers entzogen ist ;
b)     Das Zwischenprodukt wird durch Zugabe von Fertigprodukt in ein Mischgut mit einem Trockenstoffgehalt von 60 bis 70% überführt ;
c)     Das Mischgut wird unter fortwährender Umwälzung durch Berührung mit heißen Flächen fertig getrocknet,

dadurch gekennzeichnet, daß die Vorbehandlung gemäß Verfahrensstufe a) eine Trocknung umfaßt, in der das Gut unter fortwährender Umwälzung durch Berührung mit heißen Flächen auf einen Trockenstoffgehalt von 45 bis 55% gebracht wird.

2. Verfahren zum Trocknen von Klärschlamm auf einen wesentlich über 65%, insbesondere über 90%, liegenden Gehalt an Trockenstoff, wobei das Gut folgende Verfahrensstufen nacheinander durchläuft :

a)     Durch eine Vorbehandlung wird ein Zwischenprodukt hergestellt, dem bereits ein Teil des Wassers entzogen ist ;
b)     Das Zwischenprodukt wird zu Partikeln agglomeriert und durch Berührung mit einem heißen Gasstrom fertig getrocknet,

dadurch gekennzeichnet daß die Vorbehandlung gemäß Verfahrensstufe a) eine Trocknung umfaßt, in der das Gut unter fortwährender Umwälzung durch Berührung mit heißen Flächen auf einen Trockenstoffgehalt von 45 bis 55% gebracht wird.

3. Verfahren nach Anspruch 2, dadurch gekennzeichnet, daß in Verfahrensstufe b) eine aus den Partikeln gebildete Schicht von dem heißen Gasstrom durchsetzt wird.

4. Verfahren nach einem der Ansprüche 1 bis 3, dadurch gekennzeichnet, daß die Vorbehandlung gemäß Verfahrensstufe a) eine der Trocknung vorgeschaltete maschinelle Entwässerung umfaßt.

5. Anlage zum Trocknen von Klärschlamm nach dem Verfahren gemäß Anspruch 1,
     mit einer Vorbehandlungseinrichtung zur Erzeugung eines Zwischenproduktes,
     mit einem Mischer,
     mit einem Kontakttrockner,
     mit einer Fördereinrichtung von der Vorbehandlungseinrichtung zum Mischer,
     mit einer Fördereinrichtung vom Mischer zum Kontakttrockner
     und mit einer Rückführeinrichtung vom Kontakttrockner zum Mischer, dadurch gekennzeichnet, daß die Vorbehandlungseinrichtung einen Kontakttrockner (2) umfaßt.

6. Anlage zum Trocknen von Klärschlamm nach dem Verfahren gemäß Anspruch 2,
     mit einer Vorbehandlungseinrichtung zur Erzeugung eines Zwischenproduktes,
     mit einem Konvektionstrockner, dem eine Agglomerationseinrichtung für das Zwischenprodukt als Aufgabevorrichtung zugeordnet ist
     und mit einer Fördereinrichtung von der Vorbehandlungseinrichtung zu der Agglomerationsvorrichtung, dadurch gekennzeichnet, daß die Vorbehandlungseinrichtung einen Kontakttrockner (2) umfaßt.

7. Anlage nach Anspruch 6, dadurch gekennzeichnet, daß der Konvektionstrockner ein Bandtrockner (24) ist.

8. Anlage nach einem der Ansprüche 5 bis 7, dadurch gekennzeichnet, daß die Vorbehandlungseinrichtung eine mechanische Entwässerungseinrichtung (1) umfaßt, die dem Kontakttrockner (2) vorgeschaltet ist.

## Claims

1. A method for drying sewage sludge to a dried material content lying substantially above 65%, more particularly above 90%, the material passing through the following method steps in succession :

a)     by means of a pretreatment an intermediate product is produced, from which part of the water has already been removed ;
b)     the intermediate product is converted by the addition of finished product into a mixed material having a dried material content of between 60 and 70% ;
c)     the mixed material is finish-dried with constant turning in contact with hot surface,

characterised in that the pretreatment according to method step a) comprises a drying stage, in which the material, whilst being constantly turned, is brought to a dried material content of between 45 and 55% by contacting said material with hot surfaces.

2. A method for drying sewage sludge to a dried material content lying substantially above 65%, more particularly above 90%, the material passing through the following method steps in succession :

a)      by means of a pretreatment, an intermediate product is produced, from which part of the water has already been removed ;

b)      the intermediate product is agglomerated to form particles and is finish-dried by contacting with a hot gas flow,

characterised in that the pretreatment according to method step a) comprises a drying stage, in which the material, whilst being constantly turned, is brought to a dried material content of between 45 and 55% by contacting said material with hot surfaces.

3. A method according to claim 2, characterised in that in method step a) a layer formed from the particles is penetrated by the hot gas flow.

4. A method according to one of claims 1 to 3, characterised in that the pretreatment according to method step a) comprises a mechanical water removal upstream of the drying stage.

5. An Installation for drying sewage sludge according to the method of claim 1, comprising

a pretreatment device for producing an intermediate product,

a mixer,

a contact dryer,

a conveying device leading from the pretreatment device to the mixer,

a conveying device leading from the mixer to the contact dryer and

a return device leading from the contact dryer to the mixer, characterised in that the pretreatment device comprises a contact dryer (2).

6. An installation for drying sewage sludge according to the method of claim 2, comprising

a pretreatment device for producing an intermediate product,

a convection dryer, with which an agglomerating device for the intermediate product is associated as a feed device, and comprising

a conveging device leading from the pretreatment device to the agglomerating device, characterised in that the pretreatment device comprises a contact dryer (2).

7. An installation according to claim 6, characterised in that the convection dryer is a belt dryer (24).

8. An installation according to one of claims 5 to 7, characterised in that the pretreatment device comprises a mechanical water removal device (1), which is connected upstream of the contact dryer (2).

**Revendications**

1. Procédé de séchage de boue d'épuration à une teneur en matières sèches sensiblement supérieure à 65%, en particulier à 90%, dans lequel la matière passe successivement par les étapes suivantes :

a)      un produit intermédiaire, duquel une partie de l'eau a déjà été soutirée, est réalisé par un prétraitement,

b)      le produit intermédiaire est, par addition de produit fini, transformé en une matière de mélange ayant une teneur en matières sèches de 60 à 70%,

c)      la matière de mélange est, en circulation continue, séchée à l'état fini par contact avec des surfaces chaudes,

caractérisé en ce que le prétraitement selon l'étape a) comprend un séchage dans lequel la matière en circulation continue est amenée à une teneur en matières sèches de 45 à 55% par contact avec des surfaces chaudes.

2. Procédé de séchage de boue d'épuration à une teneur en matières sèches sensiblement supérieure à 65%, en particulier à 90%, dans lequel la matière passe successivement par les étapes suivantes :

a)      un produit intermédiaire, duquel une partie de l'eau a déjà été soutirée, est réalisé par un prétraitement,

b)      le produit intermédiaire est aggloméré en particules et il est séché à l'état fini par contact avec un courant gazeux chaud,

caractérisé en ce que le prétraitement selon l'étape a) comprend un séchage dans lequel la matière en circulation continue est amenée à une teneur en matières sèches de 45 à 55% par contact avec des surfaces chaudes.

3. Procédé suivant la revendication 2, caractérisé en ce que, dans l'étape b), une couche formée des particules est traversée par le courant gazeux chaud.

4. Procédé suivant l'une des revendications 1 à 3, caractérisé en ce que le prétraitement selon l'étape a) comprend une déshydratation mécanique prévue en amont du séchage.

5. Installation pour le séchage de boue d'épuration suivant le procédé selon la revendication 1, comprenant

un dispositif de prétraitement pour la production d'un produit intermédiaire,

un mélangeur,

un séchoir par contact,

un dispositif de transport du dispositif de prétraitement au mélangeur,

un dispositif de transport du mélangeur au séchoir par contact, et

un dispositif de recyclage du séchoir par contact au mélangeur, caractérisé en ce que le dispositif de prétraitement comprend un séchoir par contact (2).

6. Installation pour le séchage de boue d'épuration suivant le procédé selon la revendication 2, comprenant

un dispositif de prétraitement pour la production d'un produit intermédiaire,

un séchoir par convection auquel est adjoint un dispositif d'agglomération du produit intermédiaire, comme dispositif de chargement, et

un dispositif de transport du dispositif de prétraitement au dispositif d'agglomération, caractérisée en ce que le dispositif de prétraitement comprend un séchoir par contact (2).

7. Installation suivant la revendication 6, caractérisée en ce que le séchoir par convection est un séchoir à bande (24).

8. Installation suivant l'une des revendications 5 à 7, caractérisée en ce que le dispositif de prétraitement comprend un dispositif de déshydratation mécanique (1) qui est monté en amont du séchoir par contact (2).

Fig. 1

Fig. 2